# EUROPEAN PATENT SPECIFICATION

(11) **EP 3 992 689 B1**
(45) Date of publication and mention of the grant of the patent: **29.01.2025**
(21) Application number: 20204290.9
(22) Date of filing: 28.10.2020
(51) Int. Cl.: G02B 21/06, G02B 21/36, G06F 3/01

(54) **CONTROL SYSTEM FOR ADAPTING ILLUMINATION INTENSITY IN MICROSCOPY, MICROSCOPY ARRANGEMENT AND CORRESPONDING METHOD**
STEUERUNGSSYSTEM ZUR ANPASSUNG DER BELEUCHTUNGSINTENSITÄT IN DER MIKROSKOPIE, MIKROSKOPIEANORDNUNG UND ZUGEHÖRIGES VERFAHREN
SYSTÈME DE COMMANDE PERMETTANT D'ADAPTER L'INTENSITÉ D'ÉCLAIRAGE EN MICROSCOPIE, AGENCEMENT DE MICROSCOPIE ET PROCÉDÉ CORRESPONDANT

(43) Date of publication of application: 04.05.2022
(73) Proprietor: Leica Instruments (Singapore) Pte. Ltd., 608924 Singapore (SG)
(72) Inventor: Paulus, Robert, 88145 Hergatz (DE)
(74) Representative: Dehns Germany Partnerschaft mbB

(56) References cited:
- US-A1- 2010 322 479
- US-A1- 2016 274 347

## Description

### Technical Field

The present invention essentially relates to a control system configured for use with a microscopy arrangement for adapting illumination intensity for illuminating a subject to be viewed, to a microscopy arrangement comprising such control system and a microscope, and to a method for adapting illumination intensity for illuminating a subject to be viewed with a microscope.

### Background

In microscopy, a subject to be viewed with the microscope is illuminated, typically by means of a specific illumination source. Document DE 20 2001 000 769 U describes a microscopy arrangement in which a light detector is used to measure the intensity of the illumination of the subject. Illumination intensity is then controlled depending on the working distance of the subject with respect to the microscope. In this way, intensity of the illumination of the subject can be reduced when the working distance becomes smaller in order to prevent damage or injury of the subject due to high (or too high) illumination intensity. A similar approach is disclosed in DE 10 2005 011 121 A1. Document US 2010/0322479 A1 describes adapting illumination intensity based on a user's pupil activity in relation to a robot operator, and US 2016/0274347 A1 describes a microscope with adaptable illumination.

### Summary

According to the invention, a control system configured for use with a microscopy arrangemen, a microscopy arrangement and a method for adapting illumination intensity with the features of the independent claims are proposed. Advantageous further developments form the subject matter of the dependent claims and of the subsequent description.

The present invention relates to a control system according to claim 1. Preferably, such microscope is a surgical microscope. In this case, the subject typically comprises or is human tissue or parts of the human body. The microscope might also be a microscope which is used for observing samples (as the subject) which could suffer from light irradiation which is higher than needed to acquire the expected information from the sample (e.g. a sample which tends to bleaching while fluorescence excitation). The control system is configured to receive information relating to an actual value of a pupil diameter of an eye of a user of the microscope, and to determine, based on that received information, a control value for the illumination intensity. According to the invention, the control system is also configured to adapt, by means of controlling an illumination source, the illumination intensity based on the control value.

The information relating to an actual value of the pupil diameter can be acquired, for example, by means of a pupil capturing system for acquiring such information. In particular, an eye tracking or eye gaze system might be used for this. In general, however, any imaging system for imaging an eye of the use might be used. From an image of the eye - which includes the pupil - the actual value of the diameter of the pupil can be determined, e.g., using image processing or image analyzing methods. Such pupil capturing system can be arranged at an appropriate position at the microscope, as will be discussed in more detail later.

Considering the actual value of the diameter of a user's eye allows a very simple but effective adjustment of the illumination intensity. This idea is based on the fact that the pupil diameter of a person's eye (normally) depends on the light or light intensity reaching the eye (e.g. on environmental brightness). With the intensity (or brightness) increasing, the pupil diameter decreases and vice versa. Of course, minimum and maximum pupil diameter values of a human eye have to be considered. Typical values are a minimum of 1.5 mm and a maximum of 8 mm, depending, however, on the specific person. Thus, if an actual value of the pupil diameter of a user's eye looking to an eyepiece of the microscope, for example, is relatively small, the illumination intensity can be reduced. The pupil diameter will then increase but the user will still experience a proper illumination of the subject The main effect is that the energy impact on the subject (or tissue) is reduced and, thus, a possible harm to the subject can be prevented.

A further effect is that the user's eye can more easily adapt to the environment which typically is relatively dark with respect to the illuminated subject Thus, if the user changes his view from the eyepiece to the environment and back to the eyepiece, his eyes do not have to adapt much. This also helps to reduce potential fatigue of the user's eyes which is of particular relevance in surgeries using a surgical microscope.

Preferably, the control system is further configured to determine the control value for the illumination intensity such that the actual value of the pupil diameter is maximized. In this way, the illumination intensity and thus the energy impact to the subject can be reduced without affecting the experience of the user. For example, the control system can be configured to control the pupil diameter within a closed loop control. This helps to find the lowest possible illumination intensity without any major effect to the user experience.

It is also of advantage, if the control system is configured to determine the control value for the illumination intensity such that the actual value for the illumination intensity does not fall below a minimum value. In this way a sufficient illumination can be achieved such that, e.g., every detail in the subject still can be recognized. Note that, depending on the specific minimum value, this can result in that the maximum pupil diameter will not be reached. In other words, this can (but does not need to) mean that maximizing the pupil diameter results in choosing the minimum value for illumination intensity. The eventual behavior will depend on the specific circumstances.

Further, the control system is, preferably, configured to determine the control value for the illumination intensity such that a condition for at least one parameter of an imaging system, configured for imaging the subject to be viewed, is fulfilled. Such imaging system might be a camera used with or integrated into the microscope. Then, a display means might be provided for a user to view the subject, imaged by the imaging system. Such imaging system and display means can be provided instead of or in addition to eyepieces as will be explained in more detail later. The imaging system (camera) typically requires specific parameters to be fulfilled in order to acquire a proper image (e.g., a live image) and/or to provide a proper view of the subject These parameters are, for example, an integration time, a frame rate, a signal to noise ratio, a gain, and a gamma value. It is to be noted that this requirement typically results in a minimum value for the illumination intensity. This minimum value can (but does not need to) coincide with the minimum value mentioned before.

The invention also relates to a microscopy arrangement, comprising a microscope (preferably, a surgical microscope), an illumination source, a pupil capturing system for acquiring information relating to a pupil diameter of a user's eye, and a control system as described before. As already mentioned the microscope, preferably, includes an eyepiece configured for viewing the subject Then, the pupil capturing system is arranged at the eyepiece and configured for acquiring information relating to a pupil diameter of the user's eye, when the user is looking into the eyepiece. Also, the pupil capturing system can be located (or arranged) inside the optical system of the microscope, i.e., the pupil capturing system would be integrated in the optical system. Depending on the microscope or the use it is intended for, the eyepiece can be configured for a single eye or for both eyes of a user. The latter is typical for a surgical microscope because it allows a stereo view of the subject The specific position of the pupil capturing system should be chosen such that the eye of the user can be imaged or captured at the time the user is looking into the eyepiece. For example, a camera included in the pupil capturing system can be integrated into a rim of the eyepiece or next to the center opening of the eyepiece.

Further, the microscopy arrangement, preferably, includes an imaging system (like a camera) configured for imaging the subject, and display means configured for displaying an image of the subject (which is provided by the imaging system; the display means can include display means integrated into the microscope). Then, the pupil capturing system is arranged at the display means and configured for acquiring information relating to a pupil diameter of the user's eye, when the user is looking at the display means. Although the pupil diameter is not or not directly associated with the actual illumination intensity of the subject, this configuration also allows reducing the illumination intensity in order to minimize the energy impact to the subject. Reducing the illumination intensity will not or not much influence the brightness of the display means the user is looking at Thus, the pupil diameter of the user's eye will not be increased, which in turn results in further decrease of the illumination intensity. This, eventually, results in reaching the minimum value of the illumination intensity such that the parameters of the imaging system are still fulfilled as mentioned before.

A further control (e.g., also by means of the control system) might be provided for controlling and/or adjusting the brightness of an environmental illumination (e.g. in a surgery room) and/or for controlling the brightness of the illumination being used for the display means. Adapting brightness of the environmental illumination and/or brightness of a display mounted in the (operation) room and/or brightness of the display in the microscope, in order to keep the pupil diameter at the (ideally) same (large) diameter, helps to reduce eye fatigue while changing between the different views.

It is to be noted that the display means can comprise display means integrated into the microscope. In this case, arrangement of the pupil capturing system at the display means can mean that the pupil capturing system is arranged at the microscope or - if an eyepiece is present - at the eyepiece. In case of a so-called hybrid microscope, including an eyepiece and integrated display means, which can be looked at via the eyepiece, it might be sufficient to have only one pupil capturing system, e.g., being arranged at the eyepiece.

Such minimum illumination intensity results in the mentioned reduced energy impact to the subject (or tissue) and, in addition, in a reduced brightness in the environment As mentioned before, the environment typically is relatively dark. Major sources of illumination are, typically, only the illumination source for illuminating the subject and the display means. Such situation might occur, e.g., in a surgical room with a surgeon using a surgical microscope. Such reduced illumination or brightness deviations between surgical field, display means and environment result in reduced fatigue of not only the user's (or surgeon's) eyes but also all persons located in the operation room, which change their view from the illuminated area to the environment.

This effect is of particular relevance, if the microscope includes an eyepiece and has integrated display means (so-called hybrid microscope) as mentioned before. When using such microscope, the user typically switches between a real view of the subject using the eyepiece and a virtual view via the display means (which might provide a different view of the subject than the real view does). Depending on the specific configuration of the microscope, such display means might be viewed via the eyepiece, i.e., there can be provided a mechanism which allows exchanging the direct visual view to the subject with the view to the display means. A further option is to provide an overlay of the imaged subject being captured by the imaging system (and, for example, digitally modified) with the direct visual view. In this specific option, the brightness ratio of these two images is important to achieve an acceptable performance. The display means' brightness is typically lower than the direct visual brightness. The reduction of the direct visual brightness is increasing the performance, i.e. the eventual quality of the image, of this option.

Preferably, the display means comprise at least one of: a display means being integrated into the microscope (as mentioned before), a display means for displaying two- and/or three-dimensional image information, a stereoscopic display means, an auto-stereoscopic display means, a multi-view display means, a holographic display means, and display means including a display for each of a user's eyes. It is to be noted that integrated display means can be embodied as any of the other types of display means mentioned.

A further aspect to be mentioned is that a microscope has a specific exit pupil diameter, its value typically being between 0.5 mm and 2 mm. With the pupil diameter of the user's eye being maximized (or, at least, being brought to a value larger than the exit pupil diameter of the microscope) the position and/or orientation of the user or his eye (or eyes) with respect to the eyepiece of the microscope might vary within specific limits without any major effect on the view through the microscope; the light rays emerging from the eyepiece still lie within the border of the pupil of the user's eye. For a surgeon for example, this means that he does not have to stay in a rigid or inflexible position when looking into the eyepiece. In other words, this effect enhances the ergonomics for a surgeon using a surgical microscope.

The invention also relates to a method for adapting an illumination intensity for illuminating a subject to be viewed with a microscope, comprising the following steps: determining information relating to an actual value of a pupil diameter of an eye of a user of the microscope; determining, based on the information relating to the actual value of the pupil diameter, a control value for the illumination intensity; and adapting the illumination intensity according to the control value. Preferably, the control value for the illumination intensity is determined such that the actual value of the pupil diameter is maximized, preferably within a closed loop control for controlling the pupil diameter.

With respect to further preferred embodiments or details and advantages of the microscopy arrangement and the method, it is also referred to the remarks for the control system above, which apply here correspondingly.

The invention also relates to a computer program with a program code for performing a method according to the invention when the computer program is run on a processor or on a control system according to the invention.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

### Short Description of the Figures

- Fig. 1: shows a schematic overview of a microscopy arrangement according to the invention in a preferred embodiment
- Fig. 2: shows, schematically, a flow diagram of a method according to the invention in a preferred embodiment
- Fig. 3: shows pupil diameters of eyes for different illumination intensities.

### Detailed Description

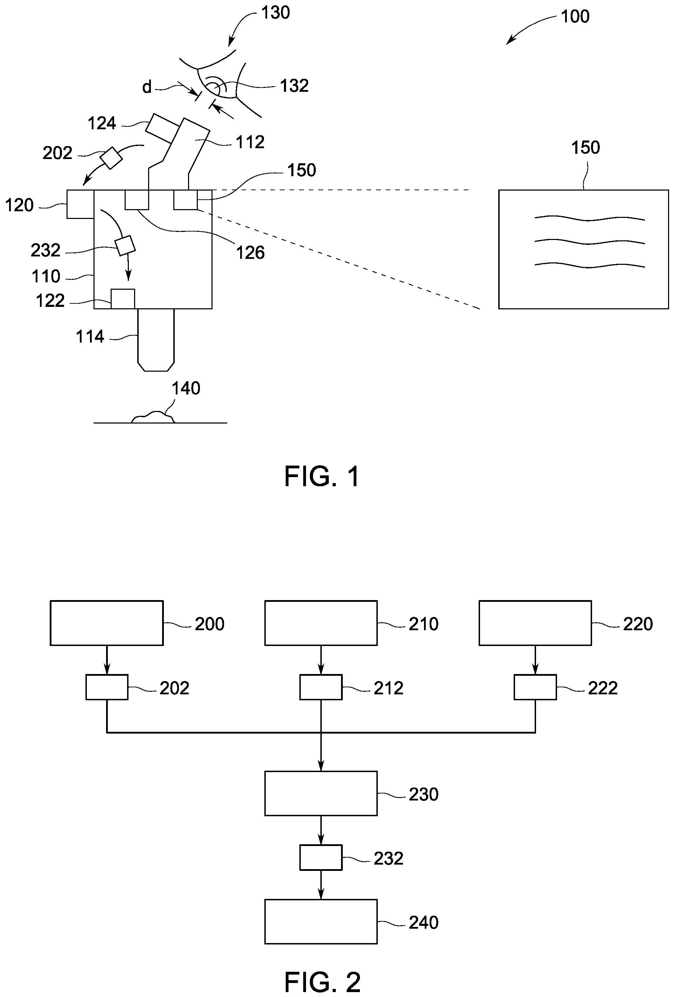

In Fig. 1, a very schematic overview of a microscopy arrangement 100 according to the invention in a preferred embodiment is shown. The microscopy arrangement 100 comprises a microscope 110, e.g., a surgical microscope, with an eyepiece 112 for a user to look at the subject 140 to be viewed, an objective 114, and an illumination source 122 for illuminating the subject 140.

Further, the microscopy arrangement 100 includes an imaging system 126, e.g., a camera, for imaging the subject 140 and display means 150 configured for displaying an image (this might be a live or real-time image), based on image data provided by the imaging system 126. Both, the imaging system 126 and the display means 150 are, preferably, integrated into the microscope 110. Thus, the microscope 110 can be called a hybrid microscope. It is to be noted that in Fig. 1 the display means 150 are also shown in an enlarged view at the right side, showing a front side at which a user is looking at.

Further, the microscopy arrangement 100 comprises a pupil capturing system 124, e.g., an eye tracking system, arranged at the eyepiece 112, and a control system 120. By means of the pupil capturing system 124, information 202 relating to an actual value of a pupil diameter d of an eye 130 of a user of the microscope 110 (the user looking into the eyepiece 112) can be determined and transmitted (as a signal) to the control system 120. By means of the control system 120, a control value 232 for the illumination intensity can be determined or calculated, based on the information 202. Further, the illumination intensity of the illumination source 122 can be adapted according to the control value 232.

In Fig. 2 a flow diagram of a method according to the invention in preferred embodiment is shown schematically. The method can be performed, e.g., with or by means of the control system 120 or the microscopy arrangement 100 shown in Fig. 1.

In step 200, information 202 relating to the actual value of a pupil diameter d of the eye of the user of the microscope 110 is determined. For example, the actual value can be directly measured by means of the pupil capturing system 124. Also, an image of the eye or the pupil can be acquired and used as the information 202. In step 210, information 212 relating to an actual value (with might be a fixed value) of the exit pupil diameter of the microscope is determined or read out In step 220, parameters 222 of the imaging system 126 (or camera) are determined or read out. These parameters 222 can include, e.g., an integration time and a frame rate of the imaging system 126.

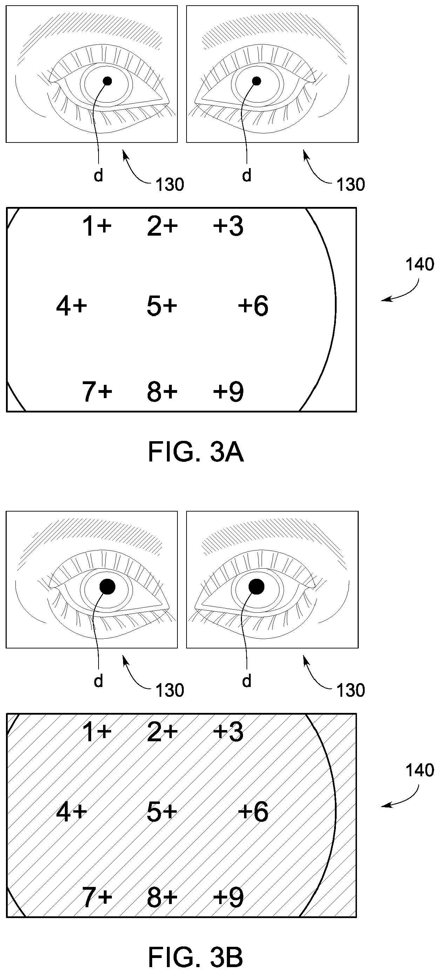

This information 202, 212 and parameters 222 (or their respective values) are received by the control system 120 and, in step 230, the information and parameters are processed and/or compared in order to determine a control value 232 for the illumination intensity. As mentioned before, the illumination intensity should be chosen such that the pupil diameter d of the user's eye is maximized, however, considering the parameters 222 of the imaging system to be fulfilled. For example, specific minimum illumination intensity is required for achieving a sufficient integration time. In step 240, the illumination intensity, provided by the illumination source, is adapted or set according to the control value 232. In Fig. 3, pupil diameters d of eyes 130 for different illumination intensities for a subject 140 are shown in order to further illustrate an idea of the invention. In the upper part of Fig. 3a, images of both eyes (each indicated by reference numeral 130) of a user looking into an eyepiece (intended for use with both eyes, i.e., a binocular eyepiece) are shown. The pupil diameters d of the eyes (their actual values should be equally sized in both eyes) are indicated with a circle. This shows, for example, how a pupil capturing system might acquire images of the eyes and how the pupil diameters can be identified and determined (e.g., by means of image processing, identifying circularly shaped black regions).

In the lower part of Fig. 3a, a subject 140 (it is, by means of example, a graphic including different numbers as used for eye sight tests) is illuminated with relatively high illumination intensity. As a consequence of the high illumination intensity, the values of the pupil diameters are relatively small.

In Fig. 3b, the same situation as in Fig. 3a is shown, with the illumination intensity for the subject 140, however, being less than in Fig. 3a. Accordingly, the values of the pupil diameters of the eyes are larger than in Fig. 3a. This shows that the pupil diameter or its actual value is indicative of the illumination intensity and, thus, can be used in order to adapt - in particular, reduce - the illumination intensity for the subject in order to minimize energy impact to it.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microscope comprising a system as described in connection with one or more of the Figs. 1 to 3. Alternatively, a microscope may be part of or connected to a system as described in connection with one or more of the Figs. 1 to 3. Fig.

1 shows a schematic illustration of a microscopy arrangement 100 configured to perform a method described herein. The microscopy arrangement 100 comprises a microscope 110 and a computer or control system 120. The microscope 110 is configured to take images and is connected to the computer system 120. The computer system 120 is configured to execute at least a part of a method described herein. The computer system 120 may be configured to execute a machine learning algorithm. The computer system 120 and microscope 110 may be separate entities but can also be integrated together in one common housing. The computer system 120 may be part of a central processing system of the microscope 110 and/or the computer system 120 may be part of a subcomponent of the microscope 110, such as a sensor, an actor, a camera or an illumination unit, etc. of the microscope 110.

The computer system 120 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 120 may comprise any circuit or combination of circuits. In one embodiment, the computer system 120 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 120 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 120 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 120 may also include a display device, one or more speakers, and a keyboard and/or controller, which can include a mouse, trackball, touch screen, voice-recognition device, or any other device that permits a system user to input information into and receive information from the computer system 120.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A control system (120) configured for use with a microscopy arrangement (100) for adapting an illumination intensity for illuminating a subject (140) to be viewed with a microscope,
the microscopy arrangement (100) comprising the microscope (110), an illumination source (122) for illuminating the subject (140), and a pupil capturing system (124) for acquiring information (202) relating to a pupil diameter (d) of a user's eye,
the control system (120) being configured to:
receive information (202) relating to an actual value of the pupil diameter (d) of the eye (130) of the user of the microscope (110),
determine, based on the information (202) relating to the actual value of the pupil diameter (d), a control value (232) for the illumination intensity, and
to adapt, by means of controlling the illumination source (122), the illumination intensity based on the control value (232).

2. The control system (120) of claim 1, further being configured to determine the control value (2322) for the illumination intensity such that the actual value of the pupil diameter (d) is maximized.

3. The control system (120) of any one of the preceding claims, further being configured to control the pupil diameter (d) within a closed loop control.

4. The control system (120) of any one of the preceding claims, further being configured to determine the control value (232) for the illumination intensity such that the actual value for the illumination intensity does not fall below a minimum value.

5. The control system (120) of any one of the preceding claims, further being configured to determine the control value (232) for the illumination intensity such that a condition for at least one parameter (222) of an imaging system (126), configured for imaging the subject (140) to be viewed, is fulfilled.

6. The control system (120) of claim 5, wherein the at least one parameter (222) is selected from: an integration time, a frame rate, a signal to noise ratio, a gain, and a gamma value.

7. A microscopy arrangement (100), comprising a microscope (110), an illumination source (122), a pupil capturing system (124) for acquiring information (202) relating to a pupil diameter (d) of a user's eye, and the control system (120) of any one of the preceding claims.

8. The microscopy arrangement (100) of claim 7, the microscope (110) including an eyepiece (112) configured for viewing the subject (140), wherein the pupil capturing system (124) is arranged at the eyepiece (112) of the microscope (110) or located inside an optical system of the microscope (110), and wherein the pupil capturing system (124) is configured for acquiring information (202) relating to a pupil diameter (d) of the user's eye (130), when the user is looking into the eyepiece (112).

9. The microscopy arrangement (100) of claim 7 or 8, further including an imaging system (126) configured for imaging the subject (120), and display means (150) configured for displaying an image of the subject (140), wherein the pupil capturing system is arranged at the display means (150) and configured for acquiring information relating to a pupil diameter (d) of the user's eye (130), when the user is looking at the display means (150).

10. The microscopy arrangement (100) of claim 9, the display means comprising at least one of: a display means (150) being integrated into the microscope (110), a display means for displaying two- and/or three-dimensional image information, a stereoscopic display means, an auto-stereoscopic display means, a multi-view display means, a holographic display means, and display means including a display for each of a user's eyes.

11. The microscopy arrangement (150) of any one of claims 7 to 10, wherein the pupil capturing system (124) comprises at least one of: an eye tracking system, an eye gaze system, and an imaging system for imaging an eye.

12. A method for adapting an illumination intensity for illuminating a subject (140) being viewed with a microscope (110) of a microscopy arrangement (100), the microscopy arrangement (100) comprising the microscope (110), an illumination source (122) for illuminating the subject (140), and a pupil capturing system (124) for acquiring information (202) relating to a pupil diameter (d) of a user's eye,
the method comprising the following steps:
determining (200) information (202) relating to an actual value of a pupil diameter (d) of an eye (130) of a user of the microscope (110),
determining (230), based on the information (202) relating to the actual value of the pupil diameter (d), a control value (232) for the illumination intensity, and
adapting (240) the illumination intensity according to the control value (232), by means of controlling the illumination source (122).

13. The method of claim 12, wherein the control value (232) for the illumination intensity is determined such that the actual value of the pupil diameter (d) is maximized, preferably within a closed loop control for controlling the pupil diameter (d).

14. The method of claim 12 or 13, using the microscopy arrangement (100) of any one of claims 7 to 11.

15. A computer program with a program code for performing the method of claim 12 or 13, when the computer program is run on a processor or on the control system (120) of any one of claims 1 to 11.

## Patentansprüche

1. Steuerungssystem (120), konfiguriert zur Verwendung mit einer Mikroskopieanordnung (100) zur Anpassung einer Beleuchtungsintensität zum Beleuchten eines Gegenstands (140), der mit einem Mikroskop betrachtet werden soll,
wobei die Mikroskopieanordnung (100) das Mikroskop (110), eine Beleuchtungsquelle (122) zum Beleuchten des Gegenstands (140) und ein Pupillenerfassungssystem (124) zum Erlangen von Informationen (202) in Bezug auf einen Pupillendurchmesser (d) eines Auges eines Benutzers umfasst,
wobei das Steuerungssystem (120) konfiguriert ist, um:
Informationen (202) in Bezug auf einen tatsächlichen Wert des Pupillendurchmessers (d) des Auges (130) des Benutzers des Mikroskops (110) zu empfangen,
basierend auf den Informationen (202) in Bezug auf den tatsächlichen Wert des Pupillendurchmessers (d) einen Steuerungswert (232) für die Beleuchtungsintensität zu bestimmen, und
mittels Steuern der Beleuchtungsquelle (122) die Beleuchtungsintensität basierend auf dem Steuerungswert (232) anzupassen.

2. Steuerungssystem (120) nach Anspruch 1, das weiter konfiguriert ist, um den Steuerungswert (2322) für die Beleuchtungsintensität so zu bestimmen, dass der tatsächliche Wert des Pupillendurchmessers (d) maximiert ist.

3. Steuerungssystem (120) nach einem der vorstehenden Ansprüche, das weiter konfiguriert ist, um den Pupillendurchmesser (d) innerhalb eines geschlossenen Regelkreises zu steuern.

4. Steuerungssystem (120) nach einem der vorstehenden Ansprüche, das weiter konfiguriert ist, um den Steuerungswert (232) für die Beleuchtungsintensität so zu bestimmen, dass der tatsächliche Wert für die Beleuchtungsintensität nicht unter einen Mindestwert fällt.

5. Steuerungssystem (120) nach einem der vorstehenden Ansprüche, das weiter konfiguriert ist, um den Steuerungswert (232) für die Beleuchtungsintensität so zu bestimmen, dass eine Bedingung für mindestens einen Parameter (222) eines Abbildungssystems (126), das konfiguriert ist, um den zu betrachtenden Gegenstand (140) abzubilden, erfüllt ist.

6. Steuerungssystem (120) nach Anspruch 5, wobei der mindestens eine Parameter (222) ausgewählt ist aus: einer Integrationszeit, einer Bildwechselfrequenz, einem Signal-Rausch-Verhältnis, einer Verstärkung und einem Gammawert.

7. Mikroskopieanordnung (100), umfassend ein Mikroskop (110), eine Beleuchtungsquelle (122), ein Pupillenerfassungssystem (124) zum Erlangen von Informationen (202) in Bezug auf einen Pupillendurchmesser (d) eines Auges eines Benutzers und das Steuerungssystem (120) nach einem der vorstehenden Ansprüche.

8. Mikroskopieanordnung (100) nach Anspruch 7, wobei das Mikroskop (110) ein Okular (112) einschließt, das zum Betrachten des Gegenstands (140) konfiguriert ist, wobei das Pupillenerfassungssystem (124) am Okular (112) des Mikroskops (110) angeordnet ist oder sich innerhalb eines optischen Systems des Mikroskops (110) befindet, und wobei das Pupillenerfassungssystem (124) zum Erlangen von Informationen (202) in Bezug auf einen Pupillendurchmesser (d) des Auges (130) des Benutzers, wenn der Benutzer in das Okular (112) blickt, konfiguriert ist.

9. Mikroskopieanordnung (100) nach Anspruch 7 oder 8, weiter einschließend ein Abbildungssystem (126), das zum Abbilden des Gegenstands (120) konfiguriert ist, und ein Anzeigemittel (150), das zum Anzeigen einer Abbildung des Gegenstands (140) konfiguriert ist, wobei das Pupillenerfassungssystem an dem Anzeigemittel (150) angeordnet und zum Erlangen von Informationen in Bezug auf einen Pupillendurchmesser (d) des Auges (130) des Benutzers, wenn der Benutzer auf das Anzeigemittel (150) blickt, konfiguriert ist.

10. Mikroskopieanordnung (100) nach Anspruch 9, wobei das Anzeigemittel mindestens eines umfasst von: ein Anzeigemittel (150), das in das Mikroskop (110) integriert ist, ein Anzeigemittel zum Anzeigen zwei- und/oder dreidimensionaler Abbildungsinformationen, ein stereoskopisches Anzeigemittel, ein autostereoskopisches Anzeigemittel, ein Mehrfachansicht-Anzeigemittel, ein holografisches Anzeigemittel und ein Anzeigemittel, das eine Anzeige für jedes der Augen eines Benutzers einschließt.

11. Mikroskopieanordnung (150) nach einem der Ansprüche 7 bis 10, wobei das Pupillenerfassungssystem (124) mindestens eines umfasst von: einem Augenverfolgungssystem, einem Blickverfolgungssystem und einem Abbildungssystem zum Abbilden eines Auges.

12. Verfahren zum Anpassen einer Beleuchtungsintensität zum Beleuchten eines Gegenstands (140), der mit einem Mikroskop (110) einer Mikroskopieanordnung (100) betrachtet wird, wobei die Mikroskopieanordnung (100) das Mikroskop (110), eine Beleuchtungsquelle (122) zum Beleuchten des Gegenstands (140) und ein Pupillenerfassungssystem (124) zum Erlangen von Informationen (202) in Bezug auf einen Pupillendurchmesser (d) eines Auges eines Benutzers umfasst,
wobei das Verfahren die folgenden Schritte umfasst:
Bestimmen (200) von Informationen (202) in Bezug auf einen tatsächlichen Wert eines Pupillendurchmessers (d) eines Auges (130) eines Benutzers des Mikroskops (110),
Bestimmen (230) eines Steuerungswerts (232) für die Beleuchtungsintensität basierend auf den Informationen (202) in Bezug auf den tatsächlichen Wert des Pupillendurchmessers (d), und
Anpassen (240) der Beleuchtungsintensität entsprechend dem Steuerungswert (232) mittels Steuern der Beleuchtungsquelle (122).

13. Verfahren nach Anspruch 12, wobei der Steuerungswert (232) für die Beleuchtungsintensität so bestimmt wird, dass der tatsächliche Wert des Pupillendurchmessers (d) maximiert wird, vorzugsweise innerhalb eines geschlossenen Regelkreises zum Steuern des Pupillendurchmessers (d).

14. Verfahren nach Anspruch 12 oder 13, unter Verwendung der Mikroskopieanordnung (100) nach einem der Ansprüche 7 bis 11.

15. Computerprogramm mit einem Programmcode zum Durchführen des Verfahrens nach Anspruch 12 oder 13, wenn das Computerprogramm auf einem Prozessor oder auf dem Steuerungssystem (120) nach einem der Ansprüche 1 bis 11 laufen gelassen wird.

## Revendications

1. Système (120) de commande configuré pour être utilisé avec un agencement de microscopie (100) pour adapter une intensité d'éclairage afin d'éclairer un sujet (140) à observer à l'aide d'un microscope,
l'agencement de microscopie (100) comprenant le microscope (110), une source (122) d'éclairage pour éclairer le sujet (140), et un système (124) de capture de pupille pour acquérir des informations (202) relatives à un diamètre (d) de pupille de l'œil d'un utilisateur,
le système (120) de commande étant configuré pour :
recevoir des informations (202) relatives à une valeur réelle du diamètre (d) de pupille de l'œil (130) de l'utilisateur du microscope (110),
déterminer, sur la base des informations (202) relatives à la valeur réelle du diamètre (d) de pupille, une valeur de régulation (232) pour l'intensité d'éclairage, et
adapter, au moyen de la régulation de la source (122) d'éclairage, l'intensité d'éclairage sur la base de la valeur de régulation (232).

2. Système (120) de commande selon la revendication 1, étant en outre configuré pour déterminer la valeur de régulation (2322) pour l'intensité d'éclairage de telle sorte que la valeur réelle du diamètre (d) de pupille est maximisée.

3. Système (120) de commande selon l'une quelconque des revendications précédentes, étant en outre configuré pour réguler le diamètre (d) de pupille dans le cadre d'une régulation en boucle fermée.

4. Système (120) de commande selon l'une quelconque des revendications précédentes, étant en outre configuré pour déterminer la valeur de régulation (232) pour l'intensité d'éclairage de telle sorte que la valeur réelle de l'intensité d'éclairage ne chute pas en dessous d'une valeur minimale.

5. Système (120) de commande selon l'une quelconque des revendications précédentes, étant en outre configuré pour déterminer la valeur de régulation (232) pour l'intensité d'éclairage de telle sorte qu'une condition pour au moins un paramètre (222) d'un système d'imagerie (126), configuré pour l'imagerie du sujet (140) à observer, est remplie.

6. Système (120) de commande selon la revendication 5, dans lequel le au moins un paramètre (222) est choisi parmi : un temps d'intégration, une fréquence de trames, un rapport signal/bruit, un gain, et une valeur gamma.

7. Agencement de microscopie (100) comprenant un microscope (110), une source (122) d'éclairage, un système (124) de capture de pupille pour acquérir des informations (202) relatives à un diamètre (d) de pupille de l'œil d'un utilisateur, et le système (120) de commande selon l'une quelconque des revendications précédentes.

8. Agencement de microscopie (100) selon la revendication 7, le microscope (110) incluant un oculaire (112) configuré pour observer le sujet (140), dans lequel le système (124) de capture de pupille est agencé au niveau de l'oculaire (112) du microscope (110) ou situé à l'intérieur d'un système optique du microscope (110), et dans lequel le système (124) de capture de pupille est configuré pour acquérir des informations (202) relatives à un diamètre (d) de pupille de l'œil (130) de l'utilisateur, lorsque l'utilisateur regarde dans l'oculaire (112).

9. Agencement de microscopie (100) selon la revendication 7 ou la revendication 8, en outre incluant un système d'imagerie (126) configuré pour l'imagerie du sujet (120), et des moyens d'affichage (150) configurés pour l'affichage d'une image du sujet (140), dans lequel le système de capture de pupille est agencé au niveau des moyens d'affichage (150) et configuré pour acquérir des informations relatives à un diamètre (d) de pupille de l'œil (130) de l'utilisateur, lorsque l'utilisateur regarde au niveau des moyens d'affichage (150).

10. Agencement de microscopie (100) selon la revendication 9, les moyens d'affichage comprenant au moins l'un parmi : des moyens d'affichage (150) intégrés dans le microscope (110), des moyens d'affichage pour afficher des informations d'image bidimensionnelles et/ou tridimensionnelles, des moyens d'affichage stéréoscopiques, des moyens d'affichage auto-stéréoscopiques, des moyens d'affichage à vues multiples, des moyens d'affichage holographiques, et des moyens d'affichage incluant un affichage pour chacun des yeux d'un utilisateur.

11. Agencement de microscopie (150) selon l'une quelconque des revendications 7 à 10, dans lequel le système (124) de capture de pupille comprend au moins l'un parmi : un système de suivi oculaire, un système de regard, et un système d'imagerie pour l'imagerie d'un oeil.

12. Procédé d'adaptation d'une intensité d'éclairage pour éclairer un sujet (140) qui est observé à l'aide d'un microscope (110) d'un agencement de microscopie (100), l'agencement de microscopie (100) comprenant le microscope (110), une source (122) d'éclairage pour éclairer le sujet (140), et un système (124) de capture de pupille pour acquérir des informations (202) relatives à un diamètre (d) de pupille de l'œil d'un utilisateur,
le procédé comprenant les étapes suivantes :
la détermination (200) d'informations (202) relatives à une valeur réelle d'un diamètre (d) de pupille d'un oeil (130) d'un utilisateur du microscope (110),
la détermination (230), sur la base des informations (202) relatives à la valeur réelle du diamètre (d) de pupille, d'une valeur de régulation (232) pour l'intensité d'éclairage, et
l'adaptation (240) de l'intensité d'éclairage en fonction de la valeur de régulation (232), au moyen de la régulation de la source (122) d'éclairage.

13. Procédé selon la revendication 12, dans lequel la valeur de régulation (232) pour l'intensité d'éclairage est déterminée de telle sorte que la valeur réelle du diamètre (d) de pupille est maximisée, de préférence dans le cadre d'une régulation en boucle fermée pour réguler le diamètre (d) de pupille.

14. Procédé selon la revendication 12 ou la revendication 13, utilisant l'agencement de microscopie (100) selon l'une quelconque des revendications 7 à 11.

15. Programme d'ordinateur ayant un code de programme pour mettre en oeuvre le procédé selon la revendication 12 ou la revendication 13, lorsque le programme d'ordinateur est exécuté sur un processeur ou sur le système (120) de commande selon l'une quelconque des revendications 1 à 11.
